# EUROPEAN PATENT APPLICATION

(11) **EP 0 707 955 A1**
(43) Date of publication of application: **24.04.1996**
(21) Application number: 95307408.5
(22) Date of filing: 18.10.1995
(51) Int. Cl.: B32B 27/08, B32B 27/30, B65D 65/40

(54) **Film/substrate composite material**

(30) Priority: 19.10.1994 US 326176
(71) Applicant: W.R. Grace & Co.-Conn., New York New York 10036 (US)
(72) Inventor: Gusavage, Gerald G., Lancaster, PA 17601 (US); Hessen, Thomas A., Ephrata, PA 17522 (US); Lorenzo, Tina V., Taylors, SC 29687 (US); Mueller, Walter B., Inman, SC 29349 (US); Owensby, Joseph E., Spartanburg, SC 29301 (US); Schirmer, Henry G., Spartanburg, SC 29302 (US); Thomas, Jeffrey A., Moore, SC 29369 (US); Toney, Gloria G., Greer, SC 29650 (US)
(74) Representative: Senior, Alan Murray

(57) **Abstract**

A composite formed from foamed polystyrene and a film bonded to the polystyrene, the film including a bonding layer of a styrene-butadiene or styrene-acrylonitrile copolymer which bonding layer includes at least about 25% by weight of butadiene or acrylonitrile. The composite may be thermoformed into articles such as trays for use in the packaging of food products, especially meat products.

## Description

### 1. Field of the Invention

The present invention is directed to thermoformable laminates of polymeric foam and film such as are used in forming trays and other items for the packaging of meat and other types of food. More specifically, the present invention is directed to laminates of polystyrene (PS) and a gaseous oxygen barrier film, i.e. O₂ barrier film, comprising a bonding layer of a styrene copolymer.

### 2. Background of the Invention

Polystyrene trays, particularly foamed polystyrene trays, are commonly used for packaging food products, such as meats, with the food product being covered by a film to prevent both contamination of the food and leakage of any juices, known as purge, from the food. For some meats it is preferred that the package is relatively gas impermeable. Such is the case when a low oxygen or otherwise modified atmosphere is necessary to preserve the meat. Examples of such applications include modified atmosphere packages which extend the shelf life of ground turkey, ground beef and cheeses, with each food product having its own specific atmosphere designed to maximize shelf life.

More specifically, there has been a package having a first film laminated onto the inside surface of a foam tray cavity, and a second film affixed to a lip of the tray, i.e., as a tray lidstock. The lidstock film is directly over the food, i.e., as the skin web of a vacuum skin package. For such barrier applications both the first film and the second film have comprised an O₂-barrier polymer.

Furthermore, for non-barrier applications, a film will often be laminated onto a polystyrene substrate, in order to present a heat sealable upper surface for lidding or vacuum skin packaging. Regardless of the barrier properties of the film employed, the film is typically laminated by heat and pressure onto a sheet of polystyrene prior to thermoforming and cutting into trays, rather than being applied to preformed trays, although the latter practice is also known.

Although trays formed from film/polystyrene sheet may be successfully employed in a variety of barrier and non-barrier packages, delamination at the film/polystyrene interface is a recurring cause of package failure, especially when the polystyrene is a foam. A defect known as "blistering" is the result of the delamination of the film from the foam. The blisters are filled with gas. It would be desirable to reduce or eliminate the blistering problem.

### SUMMARY OF THE INVENTION

It has been found that blistered foam/film composite trays of the prior art utilize primarily olefinic films which trap hydrocarbon gas which served as the blowing agent for the foam. The gas forms the blisters by separating the film from the foam at the film/foam interface, the gas resulting from diffusion of residual blowing agent gas from the foam. The present invention provides a composite suitable for forming into trays and the like, the composite exhibiting reduced blister formation, or even no substantial blister formation, by using a bonding layer comprising a composition which achieves an improved bond with the foam, thereby reducing or preventing delamination and the resulting blister formation.

As a first aspect, the present invention is directed to a composite comprising a substrate and a film adhered to the substrate. The substrate comprises polystyrene, and the film comprises a bonding layer comprising a styrene/butadiene copolymer. The bonding layer is adhered to the substrate, and is preferably directly adhered to the substrate. The bonding layer comprises butadiene mer in an amount of at least about 25 weight percent, based on the weight of the bonding layer, preferably, at least 30 weight percent. Preferably, the bonding layer comprises styrene/butadiene copolymer comprising butadiene mer in an amount of at least 25 weight percent, based on the weight of the copolymer (preferably, from about 25 to 80 weight percent; more preferably, from about 25 to 65 weight percent, still more preferably, from about 25 to 45 weight percent, and yet still more preferably, about 30 weight percent). Preferably the substrate comprises foam comprising polystyrene.

Preferably, the film is a multilayer film. Preferably, the film comprises an outer sealant layer which, in the composite, is the farthest layer from the substrate. Preferably, the film comprises an O₂-barrier layer, which is preferably between the bonding layer and the outer sealant layer. Preferably, the O₂-barrier layer comprises ethylene/vinyl alcohol copolymer. Preferably, the O₂-barrier layer has a tie layer adhered to one side thereof, more preferably, two tie layers, one on each side thereof. Preferably, the substrate comprises foam which comprises virgin polystyrene as well as polystyrene reclaim.

As a second aspect, the present invention is directed to a tray comprising the composite of the present invention. Preferably, the tray comprises a preferred composite according to the present invention.

### BRIEF DESCRIPTION OF THE DRAWINGS

The invention may be further understood by reference to the accompanying drawings where:

Figure 1 is a perspective view of a tray made in accordance with the present invention.

Figure 2 is a schematic of a cross-sectional, enlarged view of a preferred laminate according to the present invention.

### DETAILED DESCRIPTION

As used herein, the term "polystyrene" is inclusive of rubber-modified polystyrene as well as copolymers comprising styrene mer in an amount of at least 75 weight percent, based on the weight of the copolymer.

As used herein, the term "monomer" refers to a relatively simple compound, usually containing carbon and hydrogen and of low molecular weight, which can react to form a polymer by combination with itself or with other similar molecules or compounds.

As used herein, the term "comonomer" refers to a monomer which is copolymerized with at least one different monomer in a copolymerization reaction, the result of which is a copolymer.

As used herein, the term "polymer" refers to the product of a polymerization reaction, and is inclusive of homopolymers, copolymers, terpolymers, etc.

As used herein, the term "mer" refers to a repeating structural unit in a polymer. A copolymer comprises at least two different mers, and a terpolymer comprises three different mers, etc. Except for a small correction for end groups, the molecular weight of a polymer chain equals the mer weight times the degree of polymerization.

As used herein, the term "homopolymer" is used with reference to a polymer resulting from the polymerization of a single monomer, i.e., a polymer consisting essentially of a single type of repeating unit.

As used herein, the term "copolymer" refers to polymers formed by the polymerization reaction of at least two different monomers. For example, the term "copolymer" includes the copolymerization reaction product of ethylene and an α-olefin, such as 1-hexene. However, the term "copolymer" is also inclusive of, for example, the copolymerization of a mixture of ethylene, propylene, 1-hexene, and 1-octene.

As used herein, the term "polyolefin" refers to any polymerized olefin, which can be linear, branched, cyclic, aliphatic, aromatic, substituted, or unsubstituted.

As used herein, the phrase "ethylene alpha-olefin copolymer", and "ethylene/α-olefin copolymer", refer to such heterogeneous materials as linear low density polyethylene (LLDPE), linear medium density polyethylene (LMDPE) and very low and ultra low density polyethylene (VLDPE and ULDPE); and homogeneous polymers such as metallocene catalyzed polymers such as EXACT (TM) linear homogeneous ethylene/alpha-olefin copolymers supplied by Exxon, and TAFMER (TM) linear homogeneous ethylene/alpha-olefin copolymers supplied by Mitsui Petrochemical Corporation. These materials generally include copolymers of ethylene with one or more comonomers selected from C₄ to C₁₀ alpha-olefins such as butene-1 (i.e., 1-butene), hexene-1, octene-1, etc. in which the molecules of the copolymers comprise long chains with relatively few side chain branches or cross-linked structures. This molecular structure is to be contrasted with conventional low or medium density polyethylenes which are more highly branched than their respective counterparts. LLDPE, as used herein, has a density usually in the range of from about 0.915 grams per cubic centimeter to about 0.925 grams per cubic centimeter, whereas LMDPE has a density usually in the range of from about 0.926 g/cc to about 0.94 g/cc and VLDPE or ULDPE has a density usually below about 0.915 g/cc . Other ethylene/α-olefin copolymers, such as the long chain branched homogeneous ethylene/α-olefin copolymers available from the Dow Chemical Company, known as AFFINITY (TM) long chain branch homogeneous ethylene/alpha-olefin copolymers, are also included as another type of ethylene/alpha-olefin copolymer useful in the present invention.

As used herein, "EVOH" refers to ethylene/vinyl alcohol copolymer. EVOH includes saponified or hydrolyzed ethylene/vinyl acetate copolymers, and refers to a vinyl alcohol copolymer having an ethylene comonomer, and prepared by, for example, hydrolysis of vinyl acetate copolymers, or by chemical reactions with polyvinyl alcohol. The degree of hydrolysis is preferably at least 50% and more preferably at least 85%.

As used herein, the term "barrier", and the phrase "barrier layer", as applied to films and/or film layers, are used with reference to the ability of a monolayer film or a multilayer film to serve as a barrier to one or more gases, especially a film layer having the ability to serve as a barrier to gaseous oxygen, i.e., O₂. O₂-barrier layers can comprise, for example, polymerized ethylene vinyl alcohol ("EVOH"), polyvinylidene chloride ("PVDC"), etc., as known to those of skill in the art.

As used herein, the term "polyamide" refers to high molecular weight polymers having amide linkages along the molecular chain, and refers more specifically to synthetic polyamides such as nylons. Furthermore, such term encompasses both polymers comprising repeating units (i.e., mers) derived from monomers, such as caprolactam, which polymerize to form a polyamide, as well as copolymers of two or more amide monomers, also referred to as "copolyamides" herein, and copolymers derived from the copolymerization of caprolactam with a comonomer which when polymerized alone does not result in the formation of a polyamide.

As used herein, the term "ethylene/vinyl acetate copolymer" (EVA") is used to refer to a copolymer formed from ethylene and vinyl acetate monomers wherein the ethylene mers in the copolymers are present in major amounts, preferably between about 60 and 90 weight percent, based on the weight of the copolymer, and the vinyl acetate mers in the copolymer are present in minor amounts, preferably between about 2 and 4 weight percent, based on the weight of the copolymer.

As used herein, the term "polypropylene" refers to any polymer comprising propylene mers, regardless of whether the polymer is a homopolymer or a copolymer, and further includes blends of such homopolymers and copolymers. The phrase "propylene mers", and the phrase "propylene polymerization units", as used herein, refers to mers derived from the polymerization of unsubstituted propylene monomer and/or substituted propylene polymer, the double bond being opened in the polymerization reaction.

As used herein, the phrase "ethylene/propylene copolymer" ("EPC") refers to polypropylene copolymerized with small amounts of ethylene comonomer. The term "ethylene/propylene/butene terpolymer" ("EPB") refers to terpolymer composed of mers derived from these three comonomers.

As used herein, the phrase "anhydride functionality" refers to any form of anhydride functionality, such as the anhydride of maleic acid, fumaric acid, etc., whether blended with one or more polymers, grafted onto a polymer, or copolymerized with a polymer, and, in general, is also inclusive of derivatives of such functionalities, such as acids, esters, and metal salts derived therefrom.

As used herein, the phrase "modified polymer", as well as more specific phrases such as "modified ethylene vinyl acetate copolymer", and "modified polyolefin" refer to such polymers having an anhydride functionality, as defined immediately above, grafted thereon and/or copolymerized therewith and/or blended therewith. Preferably, such modified polymers have the anhydride functionality grafted on or polymerized therewith, as opposed to merely blended therewith.

As used herein, the phrase "internal layer" or "interior layer" refers to any film having its two principal surfaces with other layers of the multilayer film.

As used herein, the phrase "outer layer" refers to any film layer, of a multilayer film, having only one of its principal surfaces directly adhered to another layer of the film. Each multilayer film has two and only two outer layers.

As used herein, the phrase "directly adhered", as applied to a composite comprising a substrate and at least one film, and as applied to the layers of a multilayer film, refers to adhesion of a first element to a second element, without an adhesive, tie layer, or any other layer therebetween. In contrast, as used herein, the word "adhered" when used without the adverb "directly", broadly refers to adhesion of a first element to a second element either with or without a tie layer, an adhesive, an adhesive layer, or other element therebetween. As used herein, the word "between", as applied to a composite or multilayer film, refers to a first element being between a second element and a third element, regardless of whether or not the first element is adhered to the second element and/or the third element.

As used herein, the term "core", and the phrase "core layer", as applied to multilayer films, refer to any internal film layer which has a primary function other than serving as an adhesive or compatibilizer for adhering two layers to one another. Usually, the core layer or layers provide the multilayer film with a desired level of strength, i.e., modulus.

As used herein, the term "sealed" refers to any and all means of closing a package, such as heat sealing via hot air and/or heated bar, ultrasonic sealing, and even the use of clips on, for example, a shirred casing, etc.

As used herein, the phrase "sealant layer" or "sealing layer", with respect to multilayer films, refers to an outer film layer which is involved in the sealing of the film to a sealing layer of a lidding material. The phrase "sealant layer" as herein used refers only to outer layers, no matter how thin.

As used herein, the phrase "tie layer" or "adhesive layer" refers to any internal layer having the primary purpose of adhering two layers to one another.

As used herein, the phrase "skin layer" refers to an outermost layer of a multilayer film in packaging a product, this skin layer being subject to abuse.

As used herein, the term "extrusion" is used with reference to the process of forming continuous shapes by forcing a molten plastic material through a die, followed by cooling or chemical hardening. Immediately prior to extrusion through the die, the relatively high-viscosity polymeric material is fed into a rotating screw of variable pitch, which forces it through the die.

As used herein, the term "coextrusion" refers to the process of extruding two or more materials through a single die with two or more orifices arranged so that the extrudates merge and weld together into a laminar structure before chilling, i.e., quenching. Coextrusion can be employed in film blowing, free film extrusion, and extrusion coating processes.

As used herein, the phrase "machine direction", herein abbreviated "MD", refers to a direction "along the length" of the film, i.e., in the direction of the film as the film is formed during extrusion and/or coating.

As used herein, the phrase "transverse direction", herein abbreviated "TD", refers to a direction across the film, perpendicular to the machine or longitudinal direction.

As used herein, the term "oriented" refers to a polymer-containing material which has been stretched at an elevated temperature (the orientation temperature), followed by being "set" in the stretched configuration by cooling the material while substantially retaining the stretched dimensions. Upon subsequently heating unrestrained, unannealed, oriented polymer-containing material to its orientation temperature, heat shrinkage is produced almost to the original unstretched, i.e., pre-oriented dimensions. More particularly, the term "oriented", as used herein, refers to oriented films, wherein the orientation can be produced in one or more of a variety of manners.

As used herein, the phrase "orientation ratio" refers to the multiplication product of the extent to which the plastic film material is expanded in several directions, usually two directions perpendicular to one another. Expansion in the machine direction is herein referred to as "drawing", whereas expansion in the transverse direction is herein referred to as "stretching". The degree of orientation is also referred to as the orientation ratio, or sometimes as the "racking ratio".

The present invention is generally directed to laminates of film onto substantially rigid substrates in order to impart desired characteristics to final products formed therefrom. Specifically, polystyrene sheet is laminated with a relatively thin film in order to render final products formed from the sheet heat sealable, gas impermeable or both.

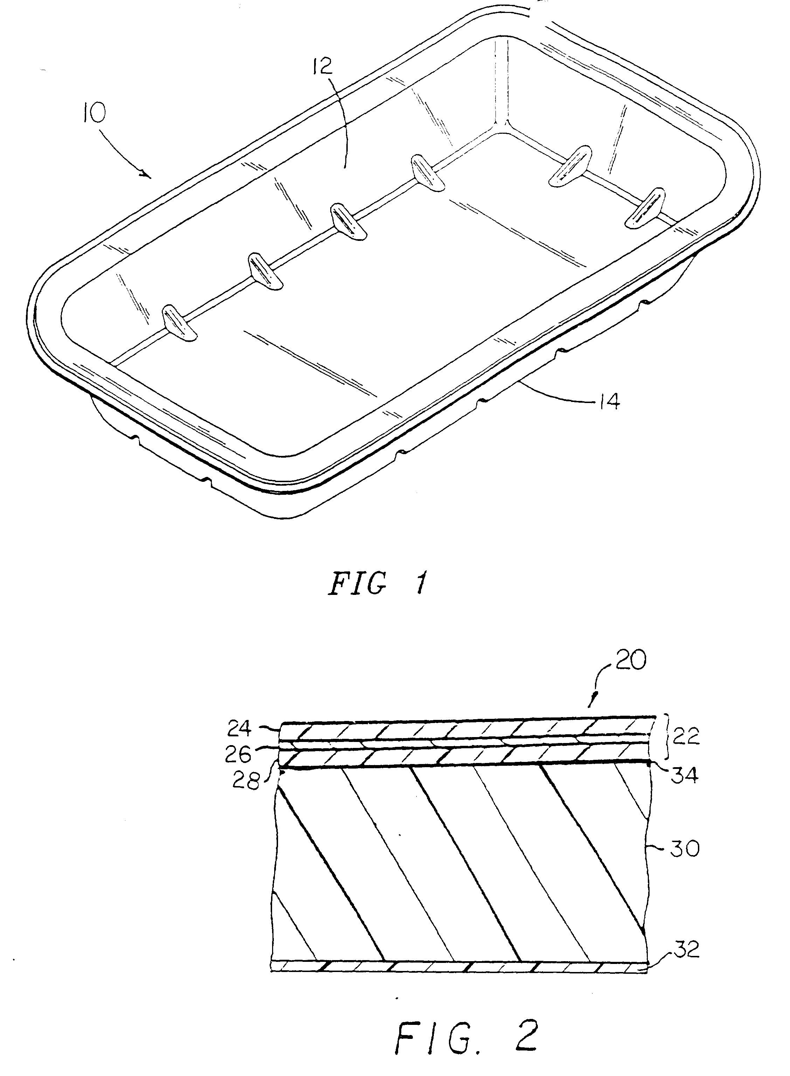

A typical example of a product comprising the composite of the present invention is tray 10, illustrated in Figure 1. Tray 10 comprises outside surface 14, and inside surface 12 making up a cavity, within which a product can be placed.

Figure 2 is a schematic cross-sectional view of a composite, i.e., thermoformable sheet 20 from which tray 1 is formed. Thermoformable sheet 20 is composed of first film 22, which is a multilayer film, foamed polystyrene sheet 30, and second film 32. Second film 32 is optional, is preferably oriented, and is preferably composed of rubber-modified polystyrene, which is preferably a monolayer film. Rubber-modified polystyrene is generally referred to as "high impact polystyrene."

When the composite is thermoformed into tray 10, or another such end-product, second film 32 forms the outside layer, and imparts strength and crack resistance to tray 10. Sealant layer 24 of film 22 is a surface layer of the film, which is preferably composed of a heat-sealable polymer. Materials such as polypropylene, ethylene/propylene copolymer, linear low density polyethylene, and/or ethylene/vinyl acetate copolymer, may be employed, depending on the composition of the sealing layer of the lidstock, the type of seal desired (peelable versus non-peelable) and the degree of abuse-resistance desired.

Sealant layer 24 may be a styrene/butadiene copolymer or a blend of such with another styrene copolymer. Such is especially useful in forming a peelable seal and includes processing advantages as are discussed in greater detail below with regard to lamination of the present bonding layer to the polystyrene foam.

Core layer 26 of multilayer film 22 provides thermoformable sheet 20 with enhanced gas barrier characteristics, and particularly as a barrier to oxygen transmission, i.e., O₂-transmission. Although vinylidene chloride copolymers, such as vinylidene chloride/vinyl chloride or vinylidene chloride/methyl acrylate, may be employed in the barrier layer of the present film, chlorine-free barrier polymers are preferred, e.g., hydrolyzed ethylene/vinyl acetate, acrylonitrile, and/or polyamide. These preferred barrier polymers are chlorine-free and are also preferred because of their thermal stability during recycling of reclaimed film and foam, as discussed in greater detail below.

Bonding layer 28 of multilayer film 22 is adhered directly to polystyrene sheet 30 at film/foam interface 34. Preferably, the bonding layer is capable of adhering to polystyrene foam 30 when exposed to heat and pressure. In accordance with the present invention, it has been found that the use of styrene/butadiene copolymers in bonding layer 28 can yield a composite, e.g., a sheet material, as well as a final product, e.g., tray 10, which is completely free of blister formation.

As noted above, blisters are believed to be formed by the delaminating effect of residual hydrocarbon blowing gas from the foam production process, this gas having an adverse effect upon the adhesion of film/foam interface 34, illustrated in Figure 2. The mechanism by which the use of styrene copolymers in bonding layer 28 prohibit the formation of blisters is not fully understood and is, in fact, somewhat surprising in view of the diminished adhesion of the present multilayer film to polystyrene foam as compared to that of prior art structures which have significant blistering, as is demonstrated in Examples 20 through 23 below. By one theory it is suggested that the juxtaposition of a hydrocarbon-free styrene layer adjacent to a hydrocarbon-solvated layer allows for absorption of hydrocarbon from one layer to the next thereby reducing the overall concentration to a lower level where the formation of gas pockets at the layer-to-layer interface is eliminated. However, empirical data seems to suggest that an increased butadiene level in the bonding layer also provides for a blister-free composite and tray after thermoforming.

Specifically, it has been found that blistering is completely eliminated at butadiene concentrations of about 25 percent by weight and higher. For purposes of the present invention the requirement of "about 25 percent by weight of butadiene" includes bonding layers of at least about 95 percent by weight of a styrene/ butadiene copolymer having 25 percent by weight of butadiene mer, and no more than about 5 percent by weight of processing additives. Furthermore, blistering can be as low as zero percent, and processability can be further improved, as the butadiene mer content of the bonding layer is increased to at least about 30 percent by weight. Thus, a preferred composition for bonding layer 28 is about 80 weight percent of a first styrene/butadiene copolymer having 25 percent butadiene mer, based on the weight of the first copolymer, and 20 percent by weight of a second styrene/butadiene copolymer having 55.5 percent butadiene mer, based on the weight of the second copolymer.

Depending upon the nature of the barrier materials and other resins utilized in the film component of the thermoformable sheet, various additional layers, including polymeric adhesive layers, i.e., tie layers, may be included in the film structure. A preferred adhesive layer for inclusion between a bonding layer comprising a styrene/butadiene copolymer, and a barrier layer comprising an ethylene/vinyl alcohol copolymer.

Other internal layers may be provided to impart processing advantages and other characteristics useful in the end use application of the material. For example, various polyolefins and olefin copolymers, including ethylene/vinyl acetate copolymer and linear low density polyethylene, may be utilized in such layers to enhance one or more desired physical properties of the final sheet. Fractional melt index polymers may also be utilized to improve thermoformability of the sheet as well as to improve processability of the multilayer film.

Further variations which are within the scope of the present invention include the use of an unfoamed polystyrene sheet in place of foam sheet 20. Although blister formation is not a problem when working with an unfoamed substrate, film 22, as described above, provides gas barrier properties, heat sealability, or both to the resulting composite.

Furthermore, although one of the primary objects of the present invention is the provision of a composite which is a "barrier sheet", and "barrier trays" formed therefrom, it is also within the scope of the invention to provide a heat-sealable tray for non-barrier applications. For such, the film of the thermoformable laminate will include only a bonding layer and an outer sealant layer with, as may be desired for improved interlaminar strength or other processing or property characteristics, further internal layers which do not lower the O₂-transmission of the film. The composite of the present invention comprises only a styrenic substrate to which is directly adhered a film comprising a copolymer of styrene and at least one comonomer selected from the group consisting of butadiene and acrylonitrile, wherein the comonomer mer is present in an amount of at least about 25 weight percent, based on the weight of the bonding layer. This film also serves as a sealant layer. Preferably, the comonomer is butadiene. Although it is believed that the copolymer can comprise one or more members selected from the group consisting of styrene/butadiene copolymer ("SB"), acrylonitrile/butadiene/ styrene terpolymer ("ABS") and styrene/acrylonitrile copolymer ("SA"), SB is the preferred copolymer for use in the film directed adhered to the foam. The film adhered to the foam is preferably a multilayer film in which the layer directly adhered to the foam comprises SB copolymer.

In addition to preventing blisters at the film-to-foam interface, the styrene-containing bonding layer has the further advantage of being highly compatible with the polystyrene foam substrate during the recycling aspects of the production process.

The thermoformable sheet can be produced as follows. Polystyrene pellets are melted under pressure and extruded in admixture with a blowing agent. Upon extrusion, the polystyrene due to expansion of gaseous blowing agent in the molten polystyrene extrudate, resulting in a foamed polystyrene sheet. Although the present invention is, in one aspect, directed to avoiding the problems associated with hydrocarbon blowing agents such as pentane, other blowing agents, most preferably carbon dioxide, may be employed alone or blended with the hydrocarbon gas. A flexible film, most preferably a barrier film having a barrier resin other than a vinylidene-based resin, is coextruded. Preferably, the film comprises a bonding layer of a styrene/ butadiene copolymer, the bonding layer comprising at least about 25% by weight of butadiene mer. Thereafter, the film is adhered to the foamed polystyrene sheet, with the bonding layer immediately adjacent to the polystyrene sheet, preferably using heat and pressure, and/or corona treatment. The resultant sheet/film composite is thermoformed into trays and the like, with the skeleton scrap being trimmed from the edges.

The skeleton scrap, and optionally other barrier foam scrap, is then ground and pelletized, creating reclaim pellets. These reclaim pellets are then placed in the hopper with virgin polystyrene, or, alternately, without virgin polystyrene, and extruded and foamed into a second foamed sheet. A flexible film is coextruded and thereafter laminated onto the second foamed sheet. The resultant laminate is thermoformed into trays, leaving skeleton scrap. Again, this skeleton scrap, and optionally other barrier foam scrap, is ground and pelletized for placement in the hopper. This process can be repeated and repeated for 10 cycles, 20 cycles or even more.

Although lamination of a foamed polystyrene sheet with a film having a bonding layer comprising styrene/butadiene copolymer is a preferred method for making the composite of the present invention, other methods may be employed. For example, a foamed/non-foamed composite formed by coextrusion of the foamed and non-foamed components. Conversely, although less preferred, it is possible to laminate a film as taught by the present invention to a pre-formed foam tray, rather than thermoforming after lamination of the film to sheet which has not yet been formed into an article. Also within the scope of the invention is the composite itself, in roll form or cut into "flats," rather than formed and cut into trays.

Further variations are to be found in the method employed for making the film to be used in the composite of the present invention. As noted above, one possibility for the preparation of the composite is the coextrusion of the film with the foam itself, as opposed to formation of the composite using heat and pressure applied through rolls, and/or the use of corona treatment of one or more of the surfaces to be adhered to one another. Preferably, however, the composite is formed by convention film and sheet extrusion processes, followed by adherence of the film to the foam, using heat and pressure, and/or corona treatment.

All of the examples disclosed below employ hot blown films. That is, the various components, on a layer-by-layer basis, are coextruded and blown, at the extrusion temperature, to the desired dimensions or gauge such that little to no orientation is imparted to the final film. However, oriented films are also within the scope of the present invention and have been found to impart additional strength to the laminated composite and to the final thermoformed product. For ease of thermoformability, a relatively low degree of orientation is preferred. A most preferred orientation ratio is 1 X 2 in each of the machine and transverse directions.

The following resins were used in the production of multilayer films in accordance with the present invention as are set forth in the examples below:
"LLDPE": DOWLEX 2244A (TM) heterogeneous ethylene octene copolymer having a melt index of 3.3 and a density of 0.916 g/cc, obtained from The Dow Chemical Company, of Midland, Michigan.
"AB": AMPACET 10853 (TM) linear low density polyethylene-based antiblock with diatomaceous silica, 20% ash and a melt index of 1.5, obtained from Ampacet Corporation, of Tarrytown, N.Y.
"ABM": An antiblock mixture which is 52% clay, 26% wax, obtained from AKZO Chemical, of Chicago, Illinois, and 22% of a fatty acid wax.
"AF": glycerol mono oleate (EMO), generally used as an antifog, but which also serves as an extrusion aid, and which can be obtained from Fisher Scientific, of Norcorss, Georgia.
"MO": mineral oil.
"EVA-1": PE 1375 (TM) ethylene vinyl acetate copolymer containing 3.6 percent by weight of vinyl acetate, a melt index of 2.0 and a density of 0.926, obtained from Rexene Products Company, of Odessa, Texas.
"EVA-2": ELVAX 3165 (TM) ethylene/vinyl acetate copolymer having 18 percent by weight of vinyl acetate, a melt index of 0.7 and a density of 0.94 g/cc, obtained from E.I. Dupont de Nemours, of Wilmington, Delaware.
"EVA-3": PE 1345YY (TM) ethylene/vinyl acetate copolymer having 3.6 percent by weight of vinyl acetate, a melt index of 1.8 to 2.2 and a density of 0.924 g/cc, also obtained from Rexene.
"EVA-4": ELVAX 3182-2 (TM) ethylene/vinyl acetate copolymer having 28 percent by weight of vinyl acetate, a melt index of 0.95 g/cc and a density of 0.95 g/cc, also obtained from Dupont.
"ADH-1": PLEXAR 107 (TM) anhydride grafted polyolefin in ethylene/vinyl acetate copolymer, having from 6.6 to 8.6 percent by weight of vinyl acetate and a melt index of 3.2, obtained from Quantum Chemical Corporation, of Cincinnati, Ohio.
"ADH-2": TYMOR 1203 (TM) anhydride-grafted linear low density polyethylene having a melt index of 1.6 and a density of 0.910 g/cc, obtained from Morton International Specialty Chemical Group, of Chicago, Illinois.
"ADH-3": BYNEL CXA 3062 (TM) anhydride-grafted ethylene/vinyl acetate copolymer having 15 to 16.5 percent vinyl acetate, obtained from Dupont.
"ADH-4": UBE 1200ul (TM) polyetheramide elastomer obtained from UBE Industries (America, Inc.), of N.Y., N.Y.
"ADH-5": BYNEL CXA E-410 (TM) anhydride-modified EVA from Dupont.
"ADH-6": BYNEL CXA E-409 (TM) anhydride-modified LLDPE from Dupont.
"EVOH-1": SOARNOL ET (TM) ethylene/vinyl alcohol copolymer having 38 mole percent of ethylene, a melt index of 3.0 and a density of 1.17 g/cc, also obtained from the Morton International Specialty Chemical Group.
"EVOH-2": LC-H101BD (TM) ethylene/vinyl alcohol copolymer having 39 mole percent of ethylene, a melt index of 1.5 and a density of 1.17 g/cc, obtained from EVAL Co. of America, of Lisle, Illinois.
"SBC-1": KK36 (TM) styrene/butadiene copolymer having 75 percent by weight of styrene, a melt index of 8.0 (Condition G of ASTM D-1238) and a density of 1.01 g/cc, obtained from Phillips 66 Company, of Pasadena, Texas.
"SBC-2": KR10 (TM) styrene/butadiene copolymer having 75 percent by weight of styrene, a melt index of 8.0 (Condition G of ASTM D-1238) and a density of 1.01 g/cc, also obtained from Phillips.
"SBC-3": STYRON XL-8028 (TM) styrene/butadiene copolymer having a melt index of 5.0 (Condition G of ASTM D-1238), also obtained from The Dow Chemical Company.
"SBC-4": STEREON 840A (TM) styrene/butadiene multiblock thermoplastic elastomer having 44.5 percent by weight of bound styrene, a melt index of 11.5 (Condition G of ASTM D-1238) and a density of 0.96 g/cc, obtained from Firestone Synthetic Rubber and Latex Co., of Akron, Ohio.
"SBC-5": STYROLOX 684D-Q188 (TM) styrene/butadiene copolymer having 75 percent by weight of styrene and a melt index of 8 to 14 (Condition G of ASTM D-1238), obtained from BASF Corporation, of Parsippany, N.J.
"SBC-6": KRAYTON G 1901X (TM) styrene butadiene copolymer having 28 percent by weight styrene, obtained from Shell.
"HIPS": high impact polystyrene, a rubber modified styrene homopolymer.
"PS": 685-D (TM) polystyrene homopolymer, also obtained from The Dow Chemical Company.
"EMA-1": EMAC SP2260 ethylene/methyl acrylate copolymer having 24 percent by weight of methyl acrylate, a melt index of 2.0 and a density of 0.947 g/cc, obtained from Chevron Chemical Co., Houston, Texas.
"EMA-2": EMAC SP2242T (TM) ethylene/methyl acrylate copolymer having 20 percent by weight of methyl acrylate, a melt index of 3.5 and a density of 0.947 g/cc, also obtained from Chevron.
"EPC": ELTEX P KS 409 (TM) propylene/ethylene copolymer having 3.2 percent by weight of ethylene, obtained from Solvay Polymer Corporation, of Houston, Texas.

The invention is illustrated by the following examples, which are provided for the purpose of representation, and are not to be construed as limiting the scope of the invention. Unless stated otherwise, all percentages, parts, etc. are by weight.

### Example 1

A multilayer film in accordance with the present invention was coextruded having the following structure and relative thickness for each layer:

| | | | | | | |
|---|---|---|---|---|---|---|
| 95%LLDPE | / EVA-2 | / ADH-2 | / EVOH-2 | / ADH-2 | / EVA-2 | /80%SBC-1 |
| 5%AB | / | / | / | / | / | / 20%SBC-4 |
| 27.8% | / 10.7% | / 8.6% | / 16.2% | / 8.6% | / 10.7% | / 17.4% |

The film was hot blown and had a final thickness of 2.25 mils.

### Example 2 (Comparative)

A multilayer film in accordance with the present invention was coextruded having the following structure and relative thickness for each layer:

| | | | | | | |
|---|---|---|---|---|---|---|
| 95%LLDPE | / EVA-1 | / ADH-1 | / EVOH-1 | / ADH-1 | / EVA-1 | /80%SBC-1 |
| 5%AB | / | / | / | / | / | / 20%EVA-3 |
| 27.8% | / 10.7% | / 8.6% | / 16.2% | / 8.6% | / 10.7% | / 17.4% |

The film was hot blown and had a final thickness of 2.25 mils.

### Example 3

A multilayer film in accordance with the present invention was coextruded having the following structure and relative thickness for each layer:

| | | | | | | |
|---|---|---|---|---|---|---|
| 95%LLDPE | / EVA-1 | / ADH-1 | / EVOH-1 | / ADH-1 | / EVA-1 | /100%SBC-1 |
| 5%AB | / | / | / | / | / | / |
| 27.8% | / 10.7% | / 8.6% | / 16.2% | / 8.6% | / 10.7% | / 17.4% |

The film was hot blown and had a final thickness of 2.25 mils.

### Example 4 (Comparative)

A multilayer film in accordance with the present invention was coextruded having the following structure and relative thickness for each layer:

| | | | | | | |
|---|---|---|---|---|---|---|
| 95%LLDPE | / EVA-1 | / ADH-1 | / EVOH-1 | / ADH-1 | / EVA-1 | / 80%SBC-1 |
| 5%AB | / | / | / | / | / | / 20%EMA-2 |
| 27.8% | / 10.7% | / 8.6% | / 16.2% | / 8.6% | / 10.7% | / 17.4% |

The film was hot blown and had a final thickness of 2.25 mils.

### Example 5

A multilayer film in accordance with the present invention was coextruded having the following structure and relative thickness for each layer:

| | | | | | | |
|---|---|---|---|---|---|---|
| 95%LLDPE | / EVA-1 | / ADH-1 | / EVOH-1 | / ADH-1 | / EVA-1 | / 97%SBC-2 |
| 5%AB | / | / | / | / | / | / 3%SBC-3 |
| 27.8% | / 10.7% | / 8.6% | / 16.2% | / 8.6% | / 10.7% | / 17.4% |

The film was hot blown and had a final thickness of 2.25 mils.

### Example 6

A multilayer film in accordance with the present invention was coextruded having the following structure and relative thickness for each layer:

| | | | | | | |
|---|---|---|---|---|---|---|
| 95%LLDPE | / EVA-1 | / ADH-1 | / EVOH-1 | / ADH-1 | / EVA-1 | / 100%SBC-2 |
| 5%AB | / | / | / | / | / | / |
| 27.8% | / 10.7% | / 8.6% | / 16.2% | / 8.6% | / 10.7% | / 17.4% |

The film was hot blown and had a final thickness of 2.25 mils.

### Example 7

A multilayer film in accordance with the present invention was coextruded having the following structure and relative thickness for each layer:

| | | | | | | |
|---|---|---|---|---|---|---|
| 95%LLDPE | / EVA-1 | / ADH-1 | / EVOH-1 | / ADH-1 | / EVA-1 | / 50%SBC-2 |
| 5%AB | / | / | / | / | / | / 50%SBC-3 |
| 27.8% | / 10.7% | / 8.6% | / 16.2% | / 8.6% | / 10.7% | / 17.4% |

The film was hot blown and had a final thickness of 2.25 mils.

### Example 8

A multilayer film in accordance with the present invention was coextruded having the following structure and relative thickness for each layer:

| | | | | | | |
|---|---|---|---|---|---|---|
| 95%LLDPE | / EVA-1 | / ADH-1 | / EVOH-1 | / ADH-1 | / EVA-1 | / 20%SBC-2 |
| 5%AB | / | / | / | / | / | / 80%SBC-3 |
| 27.8% | / 10.7% | / 8.6% | / 16.2% | / 8.6% | / 10.7% | / 17.4% |

The film was hot blown and had a final thickness of 2.25 mils.

### Example 9

A multilayer film in accordance with the present invention was coextruded having the following structure and relative thickness for each layer:

| | | | | | | |
|---|---|---|---|---|---|---|
| 95%LLDPE | / EVA-1 | / ADH-2 | / EVOH-2 | / ADH-2 | / EVA-1 | / 80%SBC-1 |
| 5%AB | / | / | / | / | / | / 20%SBC-4 |
| 27.8% | / 10.7% | / 8.6% | / 16.2% | / 8.6% | / 10.7% | / 17.4% |

The film was hot blown and had a final thickness of 2.25 mils.

### Example 10

A multilayer film in accordance with the present invention was coextruded having the following structure and relative thickness for each layer:

| | | | | | | |
|---|---|---|---|---|---|---|
| 95%LLDPE | / EVA-2 | / ADH-1 | / EVOH-2 | / ADH-1 | / EVA-2 | / 80%SBC-1 |
| 5%AB | / | / | / | / | / | / 20%SBC-4 |
| 27.8% | / 10.7% | / 8.6% | / 16.2% | / 8.6% | / 10.7% | / 17.4% |

The film was hot blown and had a final thickness of 2.25 mils.

### Example 11

A multilayer film in accordance with the present invention was coextruded having the following structure and relative thickness for each layer:

| | | | | | | |
|---|---|---|---|---|---|---|
| 95%LLDPE | / EVA-2 | / ADH-2 | / EVOH-2 | / ADH-2 | / EVA-2 | / 80%SBC-5 |
| 5%AB | / | / | / | / | / | / 20%SBC-4 |
| 27.8% | / 10.7% | / 8.6% | / 16.2% | / 8.6% | / 10.7% | / 17.4% |

The film was hot blown and had a final thickness of 2.25 mils.

### Example 12 (Comparative)

A multilayer film was coextruded having the following structure and relative thickness for each layer:

| | | | | | | |
|---|---|---|---|---|---|---|
| 95%LLDPE | / EVA-1 | / ADH-1 | / EVOH-1 | / ADH-1 | / EVA-1 | / 100%EMA-1 |
| 5%AB | / | / | / | / | / | / |
| 27.8% | / 10.7% | / 8.6% | / 16.2% | / 8.6% | / 10.7% | / 17.4% |

The film was hot blown and had a final thickness of 2.25 mils.

### Example 13 (Comparative)

A multilayer film was coextruded having the following structure and relative thickness for each layer:

| | | | | | | |
|---|---|---|---|---|---|---|
| 95%LLDPE | / EVA-1 | / ADH-1 | / EVOH-1 | / ADH-1 | / EVA-1 | / 100%EMA-2 |
| 5%AB | / | / | / | / | / | / |
| 27.8% | / 10.7% | / 8.6% | / 16.2% | / 8.6% | / 10.7% | / 17.4% |

The film was hot blown and had a final thickness of 2.25 mils.

### Example 14 (Comparative)

A multilayer film was coextruded having the following structure and relative thickness for each layer:

| | | | | | | |
|---|---|---|---|---|---|---|
| 95%LLDPE | / EVA-1 | / ADH-1 | / EVOH-2 | / ADH-1 | / EVA-1 | / 100%EMA-2 |
| 5%AB | / | / | / | / | / | / |
| 27.8% | / 10.7% | / 8.6% | / 16.2% | / 8.6% | / 10.7% | / 17.4% |

The film was hot blown and had a final thickness of 2.25 mils.

### Example 15

The multilayer film of Example 1, above, was adhered to a sheet of foamed polystyrene under heat and pressure, with the foamed polystyrene having simultaneously laminated onto its opposed surface a monolayer of an oriented rubber modified polystyrene to form a multilayer composite. The sealant layer of the multilayer film was in contact with the top lamination roll which had a temperature of 230°F. The oriented rubber modified polystyrene was in contact with the bottom lamination roll which had a temperature of 295°F. Radiant heaters were employed to preheat the bonding layer of the multilayer film.

### Example 16

The final composite of Example 15 was thermoformed into trays under heat, pressure and vacuum with the oriented polystyrene side forming the bottom of the trays and the multilayer film forming the top of the trays, with the sealant layer of the multilayer film forming the uppermost surface of the trays.

### Example 17 (Comparative)

For comparative purposes, the multilayer film of Example 14, above, was laminated to a sheet of foamed polystyrene under heat and pressure, with the foamed polystyrene having simultaneously laminated onto its opposed surface a monolayer of an oriented rubber modified polystyrene to form a multilayer composite. The sealant layer of the multilayer film was in contact with the top lamination roll which had a temperature of 230°F. The oriented, rubber modified polystyrene was in contact with the bottom lamination roll which had a temperature of 295°F.

### Example 18 (Comparative)

The final composite of Comparative Example 17 was thermoformed into trays under heat, pressure and vacuum with the oriented polystyrene side forming the bottom of the trays and the multilayer film forming the top of the trays, with the sealant layer of the multilayer film forming the uppermost surface of the trays.

### Examples 19 - 22

Trays made in accordance with Example 16 and Comparative Example 18, above, were tested for blistering, delamination, film-to-foam adhesion and oxygen transmission rates. The prior art trays of Comparative Example 18 were sampled from three shifts and are set forth as three separate Examples below.

For blistering, two hundred trays from each of three shifts made in accordance with Comparative Example 18 were evaluated for blisters after 24 and 96 hours at l10°F. Four hundred trays in accordance with Example 16 were evaluated at the same conditions.

For delamination, two hundred trays from each of three shifts made in accordance with Comparative Example 18 and four hundred trays in accordance with Example 16 were evaluated for delamination of the multilayer film from the polystyrene foam under high vacuum settings of 72cmHg/2.0 seconds on a Ross 580 machine.

For film-to-foam adhesion, five trays from each of three shifts made in accordance with Comparative Example 18 and five trays in accordance with Example 16 were tested for adhesion of the multilayer film to the foam on an Instron tester with a cross-head speed of 10 inches/minute, in accordance with a modified method of ASTM F-904-91.

For oxygen transmission rate (OTR), seven trays from each of three shifts made in accordance with Comparative Example 18 and seven trays in accordance with Example 16 were tested for oxygen transmission rates by standard methodology on a MOCON (Modern Controls, Inc.) unit, in accordance with ASTM F-1307. Oxygen transmission rates are reported in cc/tray/24 hrs.

The results are set forth in Table I below:

**Table I**

| Ex. # | Tray of Ex. # | Blistering | | Delamination | Adhesion | OTR |
|---|---|---|---|---|---|---|
| | | 24hr. | 96hr. | | | |
| 19 | 16 | 0 | 0 | 0.5% | 0.37 | 0.014 |
| 20 | 18 | 54% | 77% | 2% | 0.55 | 0.015 |
| 21 | 18 | 14% | 39% | 0 | 0.64 | 0.015 |
| 22 | 18 | 26% | 59% | 0 | 0.58 | 0.013 |

### Example 23

A multilayer film in accordance with the present invention was coextruded having the following structure and relative thickness for each layer:

| | | | | | | |
|---|---|---|---|---|---|---|
| 96.85%SBC-1 | / EVA-2 | / ADH-3 | / EVOH-1 | / ADH-3 | / EVA-2 | / 96.85%SBC-1 |
| 2% MO | / | / | / | / | / | / 2% MO |
| 1.15% ABM | / | / | / | / | / | / 1.15% ABM |
| 21% | / 8.4% | / 8.4% | / 24% | / 8.4% | / 8.4% | / 21% |

The film was hot blown with a target thickness of 1 mil.

### Example 24

A multilayer film in accordance with the present invention was coextruded having the following structure and relative thickness for each layer:

| | | | | | | |
|---|---|---|---|---|---|---|
| 96.85%SBC-1 | / EVA-2 | / ADH-1 | / EVOH-1 | / ADH-1 | / EVA-2 | / 96.85%SBC-1 |
| 2% MO | / | / | / | / | / | / 2% MO |
| 1.15% ABM | / | / | / | / | / | / 1.15% ABM |
| 21% | / 8.4% | / 8.4% | / 24% | / 8.4% | / 8.4% | / 21% |

The film was hot blown with a target thickness of 1 mil. After lamination to a foamed polystyrene sheet and thermoforming and cutting of the resultant composite into trays, it was determined that a 1 mil film is too thin for use in a conventional vacuum packaging machine.

### Example 25

A multilayer film in accordance with the present invention was coextruded having the following structure and relative thickness for each layer:

| | | | | | | |
|---|---|---|---|---|---|---|
| 98.85%SBC-1 | / EVA-2 | / ADH-3 | / EVOH-1 | / ADH-3 | / EVA-2 | / 98.85%SBC-1 |
| 1.15% ABM | / | / | / | / | / | / 1.15% ABM |
| 21% | / 8.4% | / 8.4% | / 24% | / 8.4% | / 8.4% | / 21% |

The film was hot blown with a target thickness of 1 mil. After lamination to a foamed polystyrene sheet and thermoforming and cutting of the resultant composite into trays, it was determined that a 1 mil film is too thin for use in a conventional vacuum packaging machine. However, it was noted that interlaminar adhesion was improved by the replacement of Bynel CXA 3062 with Plexar 107 in the adhesive tie layer.

### Example 26

A multilayer film in accordance with the present invention was coextruded having the following structure and relative thickness for each layer:

| | | | | | | |
|---|---|---|---|---|---|---|
| 98.45%SBC-1 | / EVA-2 | / ADH-3 | / EVOH-1 | / ADH-3 | / EVA-2 | / 98.45%SBC-1 |
| 1.15% ABM | / | / | / | / | / | / 1.15% ABM |
| 0.1% AF | / | / | / | / | / | / 0.1% AF |
| 21% | / 8.4% | / 8.4% | / 24% | / 8.4% | / 8.4% | / 21% |

The film was hot blown with a target thickness of 1 mil. After lamination to a foamed polystyrene sheet and thermoforming and cutting of the resultant composite into trays, it was determined that a 1 mil film is too thin for use in a conventional vacuum packaging machine. However, it was noted that interlaminar adhesion was improved by the replacement of Bynel CXA 3062 with Plexar 107 in the adhesive tie layer.

### Example 27

A multilayer film in accordance with the present invention was coextruded having the following structure and relative thickness for each layer:

| | | | | | | |
|---|---|---|---|---|---|---|
| 98.85%SBC-1 | / EVA-2 | / ADH-1 | / EVOH-1 | / ADH-1 | / EVA-2 | / 98.85%SBC-1 |
| 1.15% ABM | / | / | / | / | / | / 1.15% ABM |
| 21% | / 8.4% | / 8.4% | / 24% | / 8.4% | / 8.4% | / 21% |

The film was hot blown with a target thickness of 1 mil. After lamination to a foamed polystyrene sheet and thermoforming and cutting of the resultant composite into trays, it was determined that a 1 mil film is too thin for use in a conventional vacuum packaging machine.

### Examples 28 - 40

Monolayer films in accordance with the present invention were formed on a bench-top extruder to evaluate processability and sealability. The inventive films and comparative structures, denoted by an asterisk (*), are set forth in Table II below. Sealability tests showed the inventive films of 100% of KK-36 from Phillips to form excellent easy-open, peelable seals when sealed to itself.

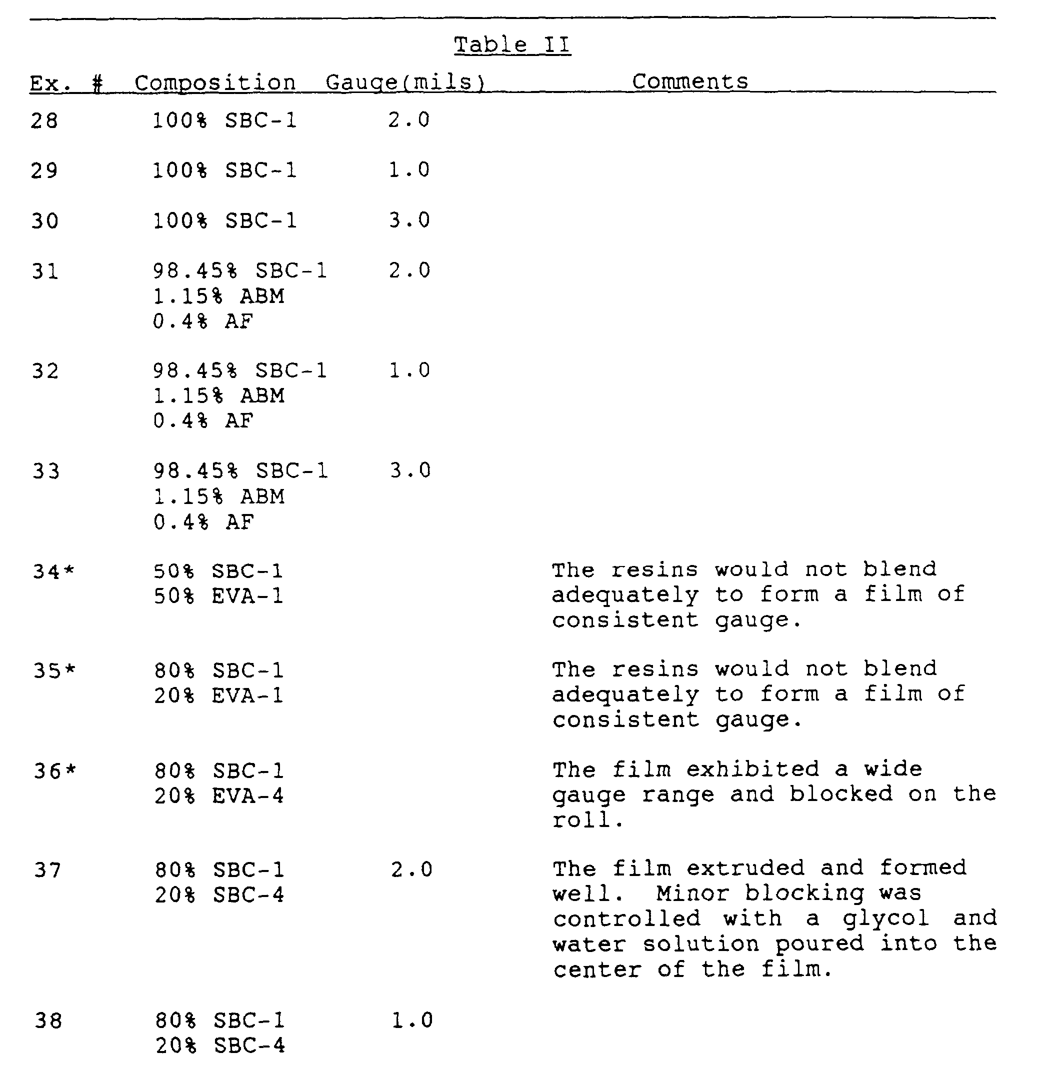

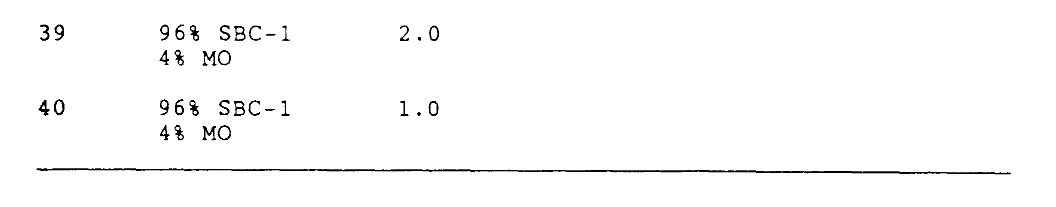

### Example 41 (Comparative)

A multilayer film in accordance with the present invention was coextruded having the following structure and target thickness in mils for each layer:

| | | | | | | | |
|---|---|---|---|---|---|---|---|
| 80%SBC-1 | / EVA-2 | / ADH-1 | / EVOH-1 | / ADH-1 | / EVA-2 | / 95%LLDPE | / 95%LLDPE |
| 20%EVA-1 | / | / | / | / | / | / 5% AB | / 5% AB |
| 0.4 | / 0.25 | / 0.2 | / 0.35 | / 0.2 | / 0.25 | / 0.3 | / 0.3 |

The film was hot blown with a target thickness of 2.25 mils.

### Example 42

A multilayer film in accordance with the present invention was coextruded having the following structure and target thickness in mils for each layer:

| | | | | | | | |
|---|---|---|---|---|---|---|---|
| 80%SBC-1 | / EVA-2 | / ADH-1 | / EVOH-1 | / ADH-1 | / EVA-2 | / 95%LLDPE | / 95%LLDPE |
| 20%SBC-4 | / | / | / | / | / | / 5% AB | / 5% AB |
| 0.4 | / 0.2 | / 0.175 | / 0.35 | / 0.175 | / 0.1 | / 0.3 | / 0.3 |

The film was hot blown with a target thickness of 2.0 mils.

### Example 43

A multilayer film in accordance with the present invention was coextruded having the following structure and target thickness in mils for each layer:

| | | | | | | | |
|---|---|---|---|---|---|---|---|
| 97.85%SBC-1 | /EVA-2 | /ADH-1 | /EVOH-1 | /ADH-1 | /EVA-2 | /96%SBC-1 | /97.85%SBC-1 |
| 1.15% ABM | / | / | / | / | / | / 4%MO | / 1.15% ABM |
| 1.0% MO | / | / | / | / | / | / | / 1.0% MO |
| 0.4 | / 0.2 | /0.175 | / 0.35 | /0.175 | / 0.1 | / 0.1 | / 0.5 |

The film was hot blown with a target thickness of 2.0 mils.

### Example 44

A multilayer film in accordance with the present invention was coextruded having the following structure and target thickness in mils for each layer:

| | | | | | | | |
|---|---|---|---|---|---|---|---|
| 80%SBC-1 | /EVA-2 | /ADH-1 | / EVOH-1 | /ADH-1 | /EVA-2 | /96%SBC-1 | /97.85%SBC-1 |
| 20%SBC-4 | / | / | / | / | / | / 4%MO | / 1.15% ABM |
| | / | / | / | / | / | / | / 1.0% MO |
| 0.4 | / 0.2 | /0.175 | / 0.35 | /0.175 | / 0.1 | / 0.1 | / 0.5 |

The film was hot blown with a target thickness of 2.0 mils.

### Example 45

A multilayer film in accordance with the present invention was coextruded having the following structure and target thickness in mils for each layer:

| | | | | | | | |
|---|---|---|---|---|---|---|---|
| 80%SBC-1 | /EVA-2 | /ADH-1 | / EVOH-1 | /ADH-1 | /EVA-2 | /96%SBC-1 | /97%SBC-1 |
| 20%SBC-4 | / | / | / | / | / | / 4%MO | / 3% HIPS |
| 0.4 | / 0.2 | /0.175 | / 0.35 | /0.175 | / 0.1 | / 0.1 | / 0.5 |

The film was hot blown with a target thickness of 2.0 mils.

### Example 46

A multilayer film in accordance with the present invention was coextruded having the following structure and target thickness in mils for each layer:

| | | | | | | | |
|---|---|---|---|---|---|---|---|
| 80%SBC-1 | /EVA-2 | /ADH-1 | / EVOH-1 | /ADH-1 | /EVA-2 | / 88%EPC | / 88%EPC |
| 20%SBC-4 | / | / | / | / | / | / 12%ABM | / 12%ABM |
| 0.4 | / 0.2 | /0.175 | / 0.35 | /0.175 | / 0.1 | / 0.1 | / 0.5 |

The film was hot blown with a target thickness of 2.0 mils.

### Example 47

A multilayer film in accordance with the present invention was coextruded having the following structure and target thickness in mils for each layer:

| | | | | | | | |
|---|---|---|---|---|---|---|---|
| 52% PS | /EVA-2 | /ADH-1 | / EVOH-1 | /ADH-1 | /EVA-2 | / 88%EPC | / 88%EPC |
| 48%SBC-4 | / | / | / | / | / | / 12%ABM | / 12%ABM |
| 0.4 | / 0.2 | /0.175 | / 0.35 | /0.175 | / 0.1 | / 0.1 | / 0.5 |

The film was hot blown with a target thickness of 2.0 mils. An attempt to run a similar structure with Elvax 3165 in the seventh layer in place of the propylene ethylene copolymer and with both outer layers of a 52% polystyrene, 48% Stereon 480A blend failed.

### Example 48

A multilayer film in accordance with the present invention was coextruded having the following structure and target thickness in mils for each layer:

| | | | | | | | |
|---|---|---|---|---|---|---|---|
| 95%LLDPE | /ADH-1 | /ADH-4 | / EVOH-1 | /ADH-4 | /ADH-1 | /EVA-2 | / 80%SBC-1 |
| 5% AB | / | / | / | / | / | / | / 20%SBC-4 |
| 0.6 | / 0.2 | /0.175 | / 0.35 | /0.175 | / 0.1 | / 0.3 | / 0.4 |

The film was hot blown with a target thickness of 2.3 mils. The UBE 1200ul adhesive resin adversely affected melt flow during extrusion.

### Example 49

A multilayer film in accordance with the present invention was coextruded having the following structure:

| | | | | | | | |
|---|---|---|---|---|---|---|---|
| 75%SBC-1 | /EVA-2 | /ADH-1 | / EVOH-1 | /ADH-1 | /EVA-2 | /EVA-2 | / 75%SBC-1 |
| 12%SBC-4 | / | / | / | / | / | / | / 12%SBC-4 |
| 13% PS | / | / | / | / | / | / | / 13% PS |
| 0.6 | / 0.2 | /0.175 | / 0.35 | /0.175 | / 0.1 | / 0.3 | / 0.4 |

This hot blown film did not run well. The resins of the outer layers are somewhat incompatible at these concentrations. An earlier attempt to extrude a similar structure having outer layers of 25% KK-36, 39% Dow 685-D and 36% Stereon 840A failed.

### Example 50

A multilayer film in accordance with the present invention was coextruded and hot blown having the following structure:

| | | | | | | | |
|---|---|---|---|---|---|---|---|
| 48.2%SBC-1 | /EVA-2 | /ADH-1 | / EVOH-1 | /ADH-1 | /EVA-2 | /EVA-2 | / 48.2%SBC-1 |
| 24% SBC-4 | / | / | / | / | / | / | / 24% SBC-4 |
| 26% PS | / | / | / | / | / | / | / 26% PS |
| 0.58% ABM | / | / | / | / | / | / | / 0.58% ABM |
| 0.5% MO | / | / | / | / | / | / | / 0.5% MO |
| 0.6 | / 0.2 | /0.175 | / 0.35 | /0.175 | / 0.1 | / 0.3 | / 0.4 |

### Example 51

A multilayer film in accordance with the present invention was coextruded having the following structure and target thickness in mils for each layer:

| | | | | | | |
|---|---|---|---|---|---|---|
| 80%SBC-1 | / EVA-2 | / ADH-1 | / EVOH-1 | / ADH-1 | / EVA-2 | / 95%LLDPE |
| 20%SBC-4 | / | / | / | / | / | / 5% AB |
| 0.4 | / 0.2 | / 0.2 | / 0.35 | / 0.2 | / 0.2 | / 0.6 |

The film was hot blown with a target thickness of 2.15 mils.

### Example 52

A multilayer film in accordance with the present invention was coextruded having the following structure and target thickness in mils for each layer:

| | | | | | | |
|---|---|---|---|---|---|---|
| 80%SBC-1 | / EVA-1 | / ADH-1 | / EVOH-1 | / ADH-1 | / EVA-2 | / 95%LLDPE |
| 20%SBC-4 | / | / | / | / | / | / 5% AB |
| 0.4 | / 0.2 | / 0.2 | / 0.35 | / 0.2 | / 0.2 | / 0.6 |

The film was hot blown with a target thickness of 2.15 mils. The PE 1375 EVA in the second layer decreased bubble stability and adversely affected melt flow as compared to the structure of Example 51.

### Example 53

A multilayer film in accordance with the present invention was coextruded having the following structure and target thickness in mils for each layer:

| | | | | | | |
|---|---|---|---|---|---|---|
| 80%SBC-1 | / ADH-5 | / ADH-1 | / EVOH-1 | / ADH-1 | / EVA-2 | / 95%LLDPE |
| 20%SBC-4 | / | / | / | / | / | / 5% AB |
| 0.4 | / 0.2 | / 0.2 | / 0.35 | / 0.2 | / 0.2 | / 0.6 |

The film was hot blown with a target thickness of 2.15 mils.

### Example 54

A multilayer film in accordance with the present invention was coextruded having the following structure and target thickness in mils for each layer:

| | | | | | | |
|---|---|---|---|---|---|---|
| 80%SBC-1 | / ADH-5 | / ADH-6 | / EVOH-1 | / ADH-1 | / EVA-2 | / 95%LLDPE |
| 20%SBC-4 | / | / | / | / | / | / 5% AB |
| 0.4 | / 0.2 | / 0.2 | / 0.35 | / 0.2 | / 0.2 | / 0.6 |

The film was hot blown with a target thickness of 2.15 mils.

### Example 55

A multilayer film in accordance with the present invention was coextruded having the following structure and target thickness in mils for each layer:

| | | | | | | |
|---|---|---|---|---|---|---|
| 80%SBC-1 | / SBC-6 | / ADH-1 | / EVOH-1 | / ADH-1 | / EVA-2 | / 95%LLDPE |
| 20%SBC-4 | / | / | / | / | / | / 5% AB |
| 0.4 | / 0.2 | / 0.2 | / 0.35 | / 0.2 | / 0.2 | / 0.6 |

The film was hot blown with a target thickness of 2.15 mils. The structure with the Krayton resin in the second layer did not run well. Although clear in appearance the film was full of gel and voids from moisture or degradation. It is believed that this particular lot of the Krayton resin may have been adversely exposed to moisture.

### Example 56

A multilayer film in accordance with the present invention was coextruded having the following structure:

| | | | | | | | | |
|---|---|---|---|---|---|---|---|---|
| SBC-1 | / SBC-1 | / SBC-1 | / ADH-2 | / EVOH-1 | / ADH-2 | / SBC-1 | / SBC-1 | / SBC-1 |

The film was hot blown with a target thickness of 1 mil. The film was laminated onto foamed polystyrene and the resultant composite was then thermoformed and cut into trays.

### Example 57

A multilayer film in accordance with the present invention was coextruded having the following structure and target thickness in mils for each layer:

| | | | | |
|---|---|---|---|---|
| KK-36 | / LINE | / SPOK | / LINE | / KK-36 |
| 0.2 | / 0.2 | / 0.2 | / 0.2 | / 0.2 |

The film was hot blown with a target thickness of 1 mil. The film was laminated onto foamed polystyrene and the resultant composite was aged 5 weeks and thereafter thermoformed and cut into trays. A first group of the resulting trays exhibited a blister rate of 4%, i.e., 4% of the trays were deemed to contain a blister. A second group of the resulting trays exhibited a blister rate of 1.5%. In contrast, trays of the prior art have typically been found to have a blister rate of at least about 50% after 96 hours at 110°F.

The foregoing description of preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A composite comprising:
(A) a substrate comprising polystyrene; and
(B) a film comprising a bonding layer which bonding layer is directly adhered to the substrate and comprises a copolymer of styrene and at least one comonomer selected from butadiene and acrylonitrile, which comonomer mer comprises at least about 25 weight percent of the bonding layer.

2. A composite according to claim 1 wherein the copolymer comprises butadiene comonomer mer in an amount of at least about 25 weight percent, based on the weight of the copolymer.

3. A composite according to claim 1 or 2, wherein the substrate comprises polystyrene foam.

4. A composite according to claim 1, 2 or 3, wherein the film is a multilayer film.

5. A composite according to claim 4, wherein the multilayer film comprises an outer sealant layer.

6. A composite according to claim 5, wherein the multilayer film comprises an oxygen-barrier layer between the bonding layer and the outer sealant layer.

7. A composite according to claim 6, wherein the oxygen-barrier layer comprises ethylene/vinyl alcohol copolymer.

8. A composite according to claim 6 or 7, wherein the multilayer film further comprises at least one further layer between the oxygen-barrier layer and the bonding layer.

9. A composite according to any one of the preceding claims, wherein the substrate comprises a recycled composite comprising recycled substrate and recycled film.

10. A composite according to any one of the preceding claims, wherein butadiene mer comprises at least about 30 weight percent of the bonding layer.

11. A tray comprising:
(A) a substrate comprising polystyrene; and
(B) a film comprising a bonding layer which bonding layer is directly adhered to the substrate, and comprises a copolymer of styrene and at least one comonomer selected from butadiene and acrylonitrile, which comonomer mer comprises at least about 25 weight percent of the bonding layer.

12. A tray according to claim 11 wherein the substrate or film is as defined in any one of the claims 2 to 10.

13. A tray according to claim 11 or 12, wherein the film is a monolayer film.
